# EUROPÄISCHE PATENTSCHRIFT

(11) **EP 0 638 467 B1**
(45) Veröffentlichungstag und Bekanntmachung des Hinweises auf die Patenterteilung: **02.02.2000**
(21) Anmeldenummer: 94110815.1
(22) Anmeldetag: 12.07.1994
(51) Int. Cl.: B60R 22/36

(54) **Gurtaufroller für Sicherheitsgurt-Rückhaltesysteme in Fahrzeugen**
Belt retractor for safety belt restraint systems in vehicles
Enrouleur de ceinture pour systèmes de retenue par ceinture de sécurité dans les véhicules

(30) Priorität: 12.08.1993 DE 4327135
(43) Veröffentlichungstag der Anmeldung: 15.02.1995
(73) Patentinhaber: TRW Occupant Restraint Systems GmbH & Co. KG, 73551 Alfdorf (DE)
(72) Erfinder: Schmid, Johannes, D-73527 Schwäbisch Gmünd (DE); Mika, Helmut, D-73550 Waldstetten (DE)
(74) Vertreter: Degwert, Hartmut, Dipl.-Phys.

(56) Entgegenhaltungen:
- EP-A- 0 084 955
- EP-A- 0 152 909
- GB-A- 2 263 623
- US-A- 4 564 154

## Beschreibung

Die Erfindung betrifft einen Gurtaufroller für Sicherheitsgurt-Rückhaltesysteme in Fahrzeugen, mit einer fahrzeug- und gurtbandsensitiven Blockierautomatik für die im Gehäuse drehbar gelagerte Gurtspule, an der eine ringförmige Sperrverzahnung angebracht ist, und mit einer am Gehäuse schwenkbar gelagerten Sperrlinke, die mindestens zwei Klinkenzähne aufweist und aus ihrer Ruhestellung durch einen an einer Steuerkulisse der Sperrklinke angreifenden Steuernocken der Blockierautomatik synchron mit der Gurtspulendrehung zum Eingriff in die Sperrverzahnung verschwenkbar ist.

Ein solcher Gurtaufroller ist aus EP-A- 152 909 bekannt.

Bei bekannten Gurtaufrollern wird eine Sperrklinke synchron mit der Gurtspulendrehung zum Eingriff in eine Sperrverzahnung der Gurtspule durch einen an der Steuerkulisse der Sperrklinke angreifenden Steuernocken verschwenkt. Damit die Klinkenzähne der Sperrklinke bei der Einsteuerbewegung nicht auf den Scheitel der Sperrzähne der Sperrverzahnung der Gurtspule auftreffen, haben die Sperrverzahnung und die Sperrklinke zu Beginn der Einsteuerbewegung eine vorbestimmte Stellung zueinander. Bei der fahrzeug- oder gurtbandsensitiven Auslösung der Blockierautomatik wird über einen Steuerhebel die Sperrklinke in die Sperrverzahnung verschwenkt. Bei schnellen Einsteuervorgängen kommt es aufgrund der Massenträgheit der am Einsteuervorgang beteiligten Steuerelemente zu einer Verzögerung der Einsteuerbewegung der Sperrklinke. Dieser Einsteuerverlust wird mit wachsender Beschleunigung der Gurtspulendrehung größer. Äußerst hohe Beschleunigungen der Gurtspulendrehung und somit große Einsteuerverluste treten beispielsweise nach einem Gurtstraffervorgang durch eine erhöhte Umkehrbeschleunigung des Gurtbands auf.

Dieser Einsteuerverlust wird zum Teil dadurch ausgeglichen, daß die Verschwenkbewegung der Sperrklinke in Bezug auf die Gurtspulendrehung vorauseilt. Der Drehwinkel der Gurtspule für die Verschwenkung der Sperrklinke aus ihrer Ruhestellung bis zur Erstberührung des Sperrzahns ist als Voreinsteuerwinkel definiert. Die maximale Größe des Voreinsteuerwinkels ist aber begrenzt, weil bei zu großem Voreinsteuerwinkel ein Verklemmen der Sperrklinke in der Blockierstellung eintritt. Ist nämlich der Voreinsteuerwinkel zu groß und treten keine hohen Einsteuerbeschleunigungen auf, so kann bei einer Aktivierung der Blockierautomatik ein Klinkenzahn der Sperrklinke mit dem nächstliegenden Zahnrücken eines Sperrzahns in Berührung kommen, bevor der Steuernocken den Scheitel der Steuerkulisse an der Sperrklinke erreicht hat.

Andererseits sind bei der Dimensionierung des Voreinsteuerwinkels aurch Fertigungstoleranzen zu berücksichtigen, so daß nur ein schmaler Winkelbereich in Frage kommt.

Aufgrund der oben angegebenen Einflüsse ist es notwendig, daß die Einsteuerung der Sperrklinke bei jedem Gurtaufroller einzeln überprüft und eventuell eine Korrektur des Voreinsteuerwinkels vorgenommen wird.

Der Erfindung liegt die Aufgabe zugrunde, einen Gurtaufroller der eingangs angegebenen Art zu schaffen, bei dem aufgrund konstruktiv einfacher Maßnahmen ein großer Voreinsteuerwinkelbereich zulässig ist, so daß auch relativ große Fertigungstoleranzen keine Einzelüberprüfung oder Korrektur des Voreinsteuerwinkels bedingen.

Diese Aufgabe wird bei dem eingangs angegebenen Gurtaufroller erfindungsgemäß dadurch gelöst, daß
a) der mit der Sperrverzahnung zuerst in Berührung gelangende Klinkenzahn als Steuerzahn ausgebildet ist;
b) die Steuerkulisse einen radialen Hub aufweist, der so bemessen ist, daß die Sperrklinke durch den Steuernocken bis zu der Erstberührung des Steuerzahns mit einer Zahnflanke der Sperrverzahnung und höchstens unwesentlich darüber hinaus verschwenkt wird; und
c) nach der Erstberührung des Steuerzahns mit einer Zahnflanke der Sperrverzahnung auf die Sperrklinke durch die Gurtspulendrehung ein Drehmoment ausgeübt wird, durch das der Sperrklinke eine Verschwenkung bis zum formschlüssigen Eingriff der Klinkenzähne mit der Sperrverzahnung aufgezwungen wird.

Der Erfindung liegt die Erkenntnis zugrunde, daß durch eine Aufteilung des Einsteuerhubes in einem ersten, durch die Steuerkulisse bestimmten Abschnitt und einen zweiten, durch den Steuerzahn der Sperrklinke bei dessen Auftreffen auf der Sperrverzahnung der Gurtspule bestimmten Abschnitt ein größerer Voreinsteuerwinkelbereich ohne Gefahr des Verklemmens der Sperrklinke in ihrer Blockierstellung möglich ist.

Gemäß einer vorteilhaften Ausführungsform der Erfindung ist der durch die Größe des Drehwinkels der Gurtspule für die Verschwenkung der Sperrklinke aus ihrer Ruhestellung bis zur Erstberührung des Steuerzahns mit einer Zahnflanke der Sperrverzahnung definierte, statisch ermittelte Voreinsteuerwinkel von der gleichen Größenordnung wie das Teilungsmaß der Sperrverzahnung. Insbesondere beträgt der Voreinsteuerwinkel zwischen dem 0,7 und dem 1,2 -fachen des Teilungsmaßes der Sperrverzahnung.

Um ein ausreichendes Drehmoment zu gewährleisten, durch das der Sperrklinke eine Verschwenkung bis zum formschlüssigen Eingriff der Klinkenzähne mit der Sperrverzahnung aufgezwungen wird, beträgt im Bereich der Erstberührung des Steuerzahns mit einer Zahnflanke der Sperrverzahnung der Winkel zwischen dem Lot auf der Zahnflanke und einer Linie durch den Ort der Erstberührung und die Schwenkachse der Sperrklinke mindestens 30° und vorzugsweise etwa 38°.

Zweckmäßig ist es, wenn der Steuerzahn eine gegenüber der verlängerten Linie durch den Scheitel und den Mittelpunkt der Sperrverzahnung zurückweichende Zahnbrust aufweist. Dadurch kann der Steuerzahn verlustarm auf einer Zahnflanke der Sperrverzahnung gleiten.

Eine Übertragung großer Kräfte bei Blockierung der Gurtspule durch die in die Sperrverzahnung eingreifende Sperrklinke wird dadurch gewährleistet, daß die Sperrklinke außer dem Steuerzahn zwei weitere Klinkenzähne aufweist.

Für einen optimalen Voreinsteuerwinkelbereich ist es von Vorteil, wenn in der Ruhestellung der Sperrklinke der Einsteuerabschnitt der Steuerkulisse mit einer Linie durch den Mittelpunkt der Sperrverzahnung auf die Achse des Steuernockens einen Winkel von etwa 60° bildet. Insbesondere ist es günstig, wenn die in Umfangsrichtung der Sperrverzahnung gemessene Erstreckung des Auslaufabschnitts etwa doppelt so groß ist wie die des Einsteuerabschnitts der Steuerkulisse.

Weitere Merkmale und Vorteile der Erfindung ergeben sich aus der folgenden Beschreibung einer Ausführungsform und aus der Zeichnung, auf die Bezug genommen wird. Es zeigen:
- Fig. 1: eine Seiten-Teilschnittansicht eines Gurtaufrollers gemäß einer Ausführungsform der Erfindung; und
- Fig. 2a bis 3c: Skizzen zur Veranschaulichung der Bedeutung des Voreinsteuerwinkels bei einem Gurtaufroller;
- Fig. 4 bis 6: die Sperrverzahnung und die Sperrklinke des Gurtaufrollers von Fig. 1 in verschiedenen Einsteuerstellungen.

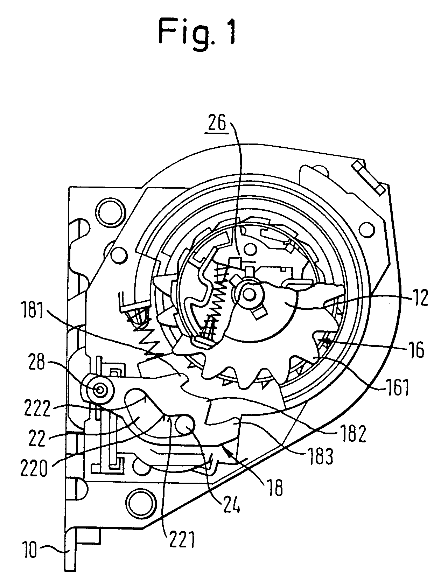

In den Fig. 1 bis 6 ist ein Gurtaufroller gemäß einer Ausführungsform der Erfindung dargestellt. In einem Gehäuse 10 ist eine Gurtspule 12 drehbar gelagert, auf die hier nicht dargestelltes Gurtband aufgewickelt wird. An beiden Seiten der Gurtspule 12 ist eine ringförmige Sperrverzahnung 16 mit Sperrzähnen 161 vorgesehen, die mit der Gurtspule 12 einstückig als Druckgußteil ausgebildet ist. Je eine schwenkbar im Gehäuse 10 gelagerte Sperrklinke 18 ist zum Eingriff in die zugehörige Sperrverzahnung 16 der Gurtspule 12 vorgesehen. Die beiden Sperrklinken 18 sind über eine hier nicht dargestellte Verbindungsstange miteinander gekoppelt, wodurch eine koordinierte Verschwenkbewegung der beiden Sperrklinken 18 ermöglicht wird. Weiterhin ist jede Sperrklinke 18 mit einem Steuerzahn 181 und zwei Klinkenzähnen 182 und 183 versehen und weist eine Steuerkulisse 22 auf, an der ein Steuernocken 24 einer herkömmlichen und daher nicht näher beschriebenen fahrzeug- und gurtbandsensitiven Blockierautomatik 26 angreift. Über die Blockierautomatik 26 und den Steuernocken 24 wird die Einsteuerbewegung der Sperrklinken 18 in die Sperrverzahnungen 16 gesteuert. Der Steuernocken 24 gleitet entlang der Steuerkulisse 22 der Sperrklinke 18, so daß diese in die Sperrverzahnung 16 der Gurtspule 12 bewegt wird. Für die Schwenkbewegung ist jede Sperrklinke 18 mit einem Lagerzapfen 28 versehen, der in einem hier nicht dargestellten Gehäuseteil gelagert ist.

Die Steuerkulisse 22 jeder Sperrklinke 18 weist auf der einen Seite ihres Scheitels 220 einen Einsteuerabschnitt 221, auf dem in der Ruhestellung der Sperrklinke 18 der Abstand vom Mittelpunkt der Sperrverzahnung 16 zunimmt, und auf der anderen Seite einen Auslaufabschnitt 222 auf, auf dem dieser Abstand Kleiner wird. Die in Umfangsrichtung der Sperrverzahnung 16 gemessene Erstreckung des Auslaufabschnitts 222 ist etwa doppelt so groß wie die des Einsteuerabschnitts 221. Über den Einsteuerabschnitt 221 ist der Steuerzahn 181 der Sperrklinke 18 in den Bereich der Sperrzähne 161 der Sperrverzahnung 16 verschwenkbar. Über den an der Steuerkulisse 22 angreifenden Steuernocken 24 erfährt die Sperrklinke 18 einen radialen Hub, der so bemessen ist, daß die Sperrklinke 18 durch den Steuernocken 24 bis zur Erstberührung des Steuerzahns 181 mit einer Zahnflanke eines Sperrzahns 161 der Sperrverzahnung 16 und höchstens unwesentlich darüber hinaus verschwenkt wird.

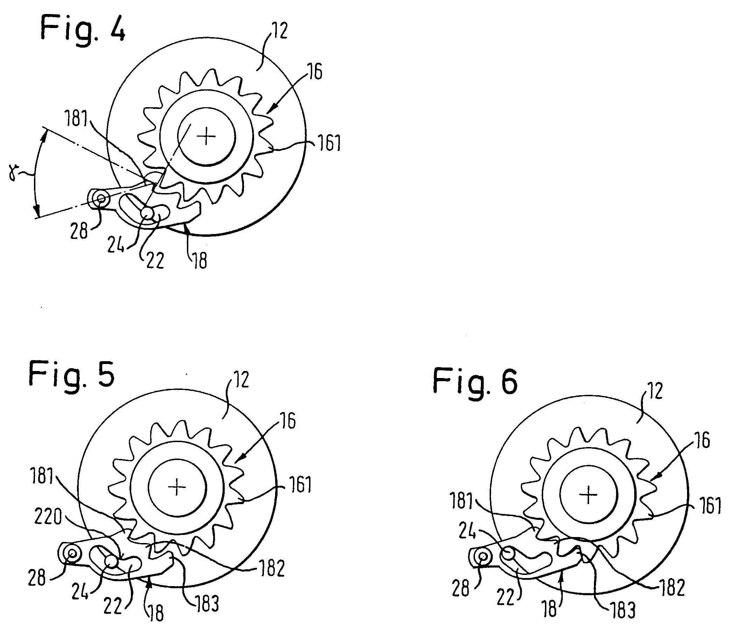

Die Verschwenkbewegung der Sperrklinken 18 erfolgt also zunächst aufgrund der Relativbewegung zwischen dem Steuernocken 24 und der Steuerkulisse 22, wobei der Steuernocken 24 die Sperrklinke 18 bis zu dem Scheitel 220 der Steuerkulisse 22 in den Bereich der Sperrverzahnung 16 verschwenkt. Anschließend bewegt sich der Steuernocken 24 entlang dem Auslaufabschnitt 222 der Steuerkulisse 22, bis bei Drehung der Gurtspule 12 der nächste Sperrzahn 161 der Sperrverzahnung 16 den Steuerzahn 181 faßt. Nach der Erstberührung des Steuerzahns 181 mit einer Zahnflanke des Sperrzahns 161 wird auf die Sperrklinke 18 als Folge der Drehung der Gurtspule 12 ein Drehmoment ausgeübt, durch das der Sperrklinke 18 eine Verschwenkung bis zum formschlüssigen Eingriff der Klinkenzähne 182, 183 mit der Sperrverzahnung 16 aufgezwungen wird. Erst mit Erreichen der endgültigen Eingriffsstellung, also wenn die Klinkenzähne 182 und 183 nahezu am Zahngrund anliegen, kommen diese jeweils mit einer Zahnflanke eines Sperrzahns 161 der Sperrverzahnung 16 in Anlage und blockieren dadurch die Gurtspule 12 (Fig. 6).

Die Besonderheit des erfindungsgemäßen Gurtaufrollers wird anhand einer Betrachtung des Sogenannten Voreinsteuerwinkels deutlich. Der Voreinsteuerwinkel ist der Drehwinkel der Gurtspule 12 vom Beginn der Verschwenkung der Sperrklinke 18 aus ihrer Ruhestellung bis zu ihrer Erstberührung mit dem nächsten, ihr gegenüberliegenden Zahn der Sperrverzahnung 16. Der Voreinsteuerwinkel wird statisch ermittelt, also bei langsamer Drehung der Gurtspule, so daß Massenträgheitseffekte nicht in Erscheinung treten.

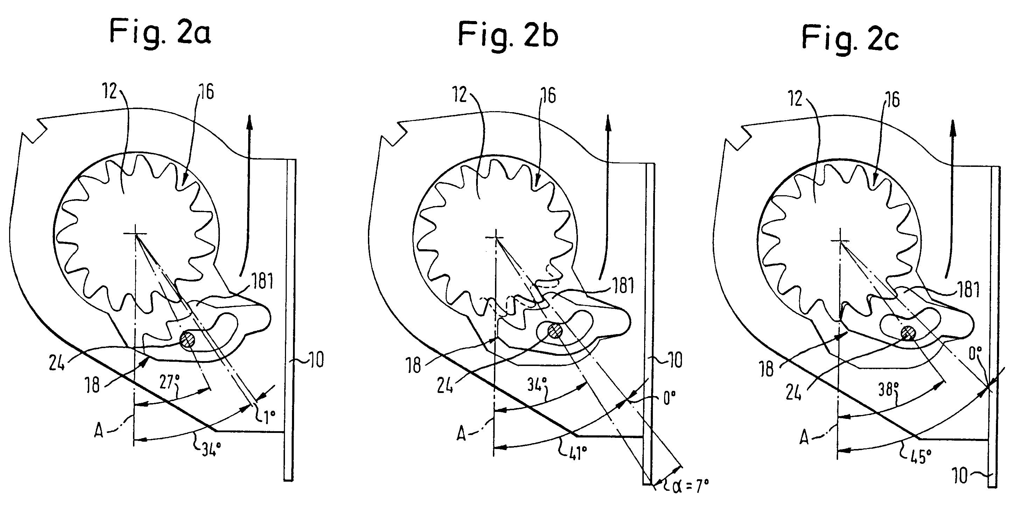

Es wird nun auf die Figuren 2a bis 3c Bezug genommen, die den Vorgang der Einsteuerung der Sperrklinke 18 in Ihrer Blockierstellung bei minimal möglichem Voreinsteuerwinkel zeigt. Der minimal mögliche Voreinsteuerwinkel ist derjenige, bei dem gewährleistet ist, daß der Steuerzahn 181 der Sperrklinke 18 noch vor dem nächsten Zahn an der sich bereits drehenden Gurtspule 12 in die ihm vorausgehende Zahnlücke trifft. Fig. 2a zeigt die Ausgangsstellung der Sperrklinke 18. Die in die Definition des Voreinsteuerwinkels eingehenden Drehwinkel sind auf eine zum Boden des Gehäuses 10 parallele Achse A bezogen. In der in Fig. 2a gezeigten Ausgangsstellung beträgt der Winkel zwischen der Achse A und einer durch die Drehachse der Gurtspule 12 und den Scheitel ihres der Steuerklinke 181 gegenüberliegenden Zahnes verlaufende Linie 34°. Der Drehwinkel zwischen der Achse A und einer durch die Drehachse der Gurtspule 12 sowie durch den Steuernocken 24 verlaufenden Linie beträgt 27°. Der Drehwinkel zwischen dem Scheitel des Steuerzahns 181 und dem ihm gegenüberliegenden Scheitel des Zahns an der Gurtspule 12 beträgt etwa 1°. Kleiner darf dieser Winkel nicht sein, damit der Steuerzahn 181 noch in die dem benachbarten Zahn vorausgehende Zahnlücke eintauchen kann.

In Fig. 2b ist diejenige Stellung gezeigt, in welcher der Steuerzahn 181 gerade mit dem benachbarten Zahn an der Gurtspule 12 in Berührung kommt. Bezogen auf die Achse A beträgt der Winkel des Zahns an der Gurtspule 12, der mit dem Steuerzahn 181 in Berührung gekommen ist, 41°, und der Winkel des Steuernockens 24 beträgt 34°.

Bei der in Fig. 2c gezeigten Blockierstellung ist die Sperrklinke 18 in formschlüssigen Eingriff mit der Sperrverzahnung 16 an der Gurtspule 12 gelangt.

Der wieder auf die Achse A bezogene Winkel desjenigen Zahns der Sperrverzahnung 16, mit dem der Steuerzahn 181 zuerst in Berührung gekommen ist, beträgt nunmehr 45°, und der Winkel des Steuernockens 24 beträgt 38°. Der Voreinsteuerwinkel α ist der Drehwinkel der Gurtspule zwischen den in Fig. 2a und 2b gezeigten Stellungen, d.h. die Differenz zwischen den Winkeln 41° und 34°, also gleich 7°.

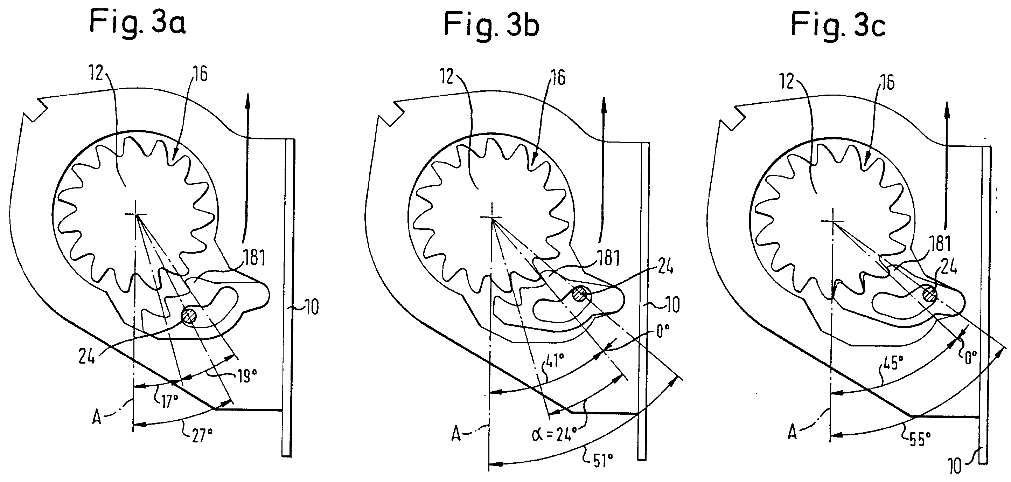

In den Figuren 3a bis 3c ist die Situation in analoger Weise für den maximal möglichen Voreinsteuerwinkel dargestellt. Der Drehwinkel zwischen dem Scheitel des Steuerzahns 181 und dem Steuernocken 24 beträgt 19°. Größer darf dieser Winkel nicht sein, damit gewährleistet ist, daß der Rücken des Steuerzahns 181 nicht gegen den Scheitel des gegenüberliegenden Zahns der Sperrverzahnung 16 stößt, wodurch das Steuersystem blockiert würde. Bei einem Winkelwert von 19° streift der Rücken des Steuerzahns 181 bereits an dem Zahnrücken des gegenüberliegenden Zahns der Sperrverzahnung 16. Der auf die Achse A bezogene Winkel desjenigen Zahns der Sperrverzahnung 16, an dem der Steuerzahn 181 angreift, beträgt in diesem Fall 17°, und der Winkel des Steuernockens 24 beträgt unverändert 27°.

Bei Erstberührung zwischen dem Steuerzahn 181 und dem betreffenden Zahn der Sperrverzahnung 16 beträgt der auf die Achse A bezogene Drehwinkel des Zahns der Sperrverzahnung 41°, und der Winkel des Steuernockens 24 beträgt 51°. Für die in Fig. 3c gezeigte Blockierstellung betragen die Winkel 45° bzw. 55°. Es ergibt sich ein maximal möglicher Voreinsteuerwinkel α von 41°-17°, also 24°. Dieser Winkel stimmt mit dem Teilungsmaß der Sperrverzahnung 16 überein: Da diese aus 15 Sperrzähnen besteht, errechnet sich das Teilungsmaß zu 360°: 15 = 24°.

Es versteht sich, daß die Werte für den minimalen und für den maximalen Voreinsteuerwinkel je nach Geometrie der Verzahnungen von den oben angegebenen Werten abweichen können. Von Bedeutung ist hauptsächlich der maximal mögliche Wert des Voreinsteuerwinkels, da durch einen großen Wert die beim dynamischen Einsteuervorgang auftretenden Verluste ausgeglichen werden können, die bei einem Gurtaufroller mit Gurtstraffer durchaus 10° bis 14° erreichen können.

In Fig. 4 ist der Zustand dargestellt, in dem der Steuerzahn 181 gerade den Sperrzahn 161 berührt. Der Abstand von dem Angriffspunkt, also dem Punkt, in dem der Steuerzahn 181 auf der Zahnflanke des Sperrzahns 161 der Sperrverzahnung 16 liegt, zum Kopfkreisdurchmesser der Sperrverzahnung 16 beträgt maximal etwa 1 mm. Der Fig. 4 ist deutlich zu entnehmen, daß sich der Steuernocken 24, wenn der Steuerzahn 181 den Sperrzahn 161 der Sperrverzahnung 16 berührt, am Scheitel 220 der Steuerkulisse 22 befindet. Weiterhin ist in Fig. 4 ein Winkel γ dargestellt, der zwischen dem Lot auf die Zahnflanke des Sperrzahns 161 im Berührungspunkt mit dem Steuerzahn 181 und einer Linie durch diesen Punkt und die Schwenkachse der Sperrklinke 18 gebildet ist und vorzugsweise etwa 38° beträgt. Durch die Größe dieses Winkels γ ist gewährleistet, daß auf die Sperrklinke 18 durch die Gurtspulendrehung ein ausreichendes Drehmoment ausgeübt wird, um der die Sperrklinke 18 eine Zwangsverschwenkung bis zum formschlüssigen Eingriff der Klinkenzähne 182, 183 mit der Sperrverzahnung 16 aufzugeben.

In Fig. 5 hat der Steuernocken 24 bereits den Scheitel 220 überschritten, und die Sperrklinke 18 wird nunmehr allein durch das sich ergebende, aufgezwungene, eben erwähnte Drehmoment in die Eingriffsstellung verschwenkt. In der Eingriffsstellung der Sperrklinke 18 in der Sperrverzahnung 16, siehe Fig. 6, besteht aufgrund der Verzahnungsgeometrie des Steuerzahns 181 sowie der Klinkenzähne 182 und 183 einerseits und der Sperrzähne 161 andererseits ein sicherer Formschluß.

Mit dem erfindungsgemäßen Gurtaufroller ergibt sich auf einfache Weise ein Voreinsteuerwinkelbereich, der mehr als das Doppelte des möglichen Wertes bei einem herkömmlichen Gurtaufroller beträgt, bei dem der gesamte Einsteuerhub durch die Steuerkulisse der Sperrklinke bewirkt wird. Der Voreinsteuerwinkel kann daher so groß gewählt werden, das er auch für sehr hohe Gurtspulendrehbeschleunigungen ausreicht und dennoch innerhalb des zulässigen Toleranzbereiches liegt, bei dem keine Verklemmung der Sperrklinke eintritt.

## Patentansprüche

1. Gurtaufroller für Sicherheitsgurt-Rückhaltesysteme in Fahrzeugen, mit einer fahrzeug- und gurtbandsensitiven Blockierautomatik (26) für die im Gehäuse (10) drehbar gelagerte Gurtspule (12), an der eine ringförmige Sperrverzahnung (16) angebracht ist, und mit einer am Gehäuse (10) schwenkbar gelagerten Sperrklinke (18), die mindestens zwei Klinkenzähne (181, 182, 183) aufweist und aus ihrer Ruhestellung durch einen an einer Steuerkulisse (22) der Sperrklinke (18) angreifenden Steuernocken (24) der Blockierautomatik (26) synchron mit der Gurtspulendrehung zum Eingriff in die Sperrverzahnung (16) verschwenkbar ist, **dadurch gekennzeichnet**, daß
a) der mit der Sperrverzahnung (16) zuerst in Berührung gelangende Klinkenzahn als Steuerzahn (181) ausgebildet ist;
b) die Steuerkulisse (22) einen radialen Hub aufweist, der so bemessen ist, daß die Sperrklinke (18) durch den Steuernocken (24) bis zu der Erstberührung des Steuerzahns (181) mit einer Zahnflanke der Sperrverzahnung (16) und höchstens unwesentlich darüber hinaus verschwenkt wird; und
c) nach der Erstberührung des Steuerzahns (181) mit einer Zahnflanke der Sperrverzahnung (16) auf die Sperrklinke (18) durch die Gurtspulendrehung ein Drehmoment ausgeübt wird, durch das der Sperrklinke (18) eine Verschwenkung bis zu ihrer Blockierstellung, die durch formschlüssigen Eingriff der Klinkenzähne (181, 182, 183) mit der Sperrverzahnung (16) definiert ist, aufgezwungen wird.

2. Gurtaufroller nach Anspruch 1, dadurch gekennzeichnet, daß der durch die Größe des Drehwinkels der Gurtspule (12) für die Verschwenkung der Sperrklinke (18) aus ihrer Ruhestellung bis zur Erstberührung des Steuerzahns (181) mit einer Zahnflanke der Sperrverzahnung (16) definierte und statisch ermittelte Voreinsteuerwinkel (α) von der gleichen Größenordnung ist wie das Teilungsmaß (β) der Sperrverzahnung (16).

3. Gurtaufroller nach Anspruch 2, dadurch gekennzeichnet, daß der statisch ermittelte Voreinsteuerwinkel (α) zwischen dem 0,7 und dem 1,2 -fachen des Teilungsmaßes (β) der Sperrverzahnung (16) beträgt.

4. Gurtaufroller nach einem der vorstehenden Ansprüche, dadurch gekennzeichnet, daß im Bereich der Erstberührung des Steuerzahns (181) mit einer Zahnflanke der Sperrverzahnung (161) der Winkel (γ) zwischen dem Lot auf die Zahnflanke und einer Linie durch den Ort der Erstberührung und die Schwenkachse der Sperrklinke (18) mindestens 30° und vorzugsweise etwa 38° beträgt.

5. Gurtaufroller nach Anspruch 4, dadurch gekennzeichnet, daß der Steuerzahn (181) eine gegenüber der verlängerten Linie durch seinen Scheitel und den Mittelpunkt der Sperrverzahnung (16) zurückweichende Zahnbrust aufweist.

6. Gurtaufroller nach einem der vorstehenden Ansprüche, dadurch gekennzeichnet, daß die Sperrklinke (18) außer dem Steuerzahn (181) zwei weitere Klinkenzähne (182, 183) aufweist.

7. Gurtaufroller nach einem der vorstehenden Ansprüche, bei dem die Steuerkulisse einen Einsteuerabschnitt (221), auf dem in der Ruhestellung der Sperrklinke (18) der Abstand vom Mittelpunkt der Sperrverzahnung (16) zunimmt, und einen daran anschließenden Auslaufabschnitt (222) aufweist, auf dem dieser Abstand Kleiner wird, dadurch gekennzeichnet, daß in der Ruhestellung der Sperrklinke (18) der Einsteuerabschnitt (221) mit einer Linie durch den Mittelpunkt der Sperrverzahnung (16) und die Achse des Steuernockens (24) einen Winkel (δ) von etwa 60° bildet.

8. Gurtaufroller nach Anspruch 7, dadurch gekennzeichnet, daß die in Umfangsrichtung der Sperrverzahnung (16) gemessene Erstreckung des Auslaufabschnitts (222) etwa doppelt so groß ist wie die des Einsteuerabschnitts (221).

## Claims

1. A belt retractor for vehicular seat belt restraining systems, having a vehicle-sensitive and belt-sensitive automatic blocking mechanism (26) for the belt reel (12) rotatably mounted in the housing (10), on which a ring-shaped locking toothing (16) is provided, and further having a locking pawl (18) pivotably mounted on the housing (10) and having at least two paw] teeth (181, 182, 183) and which can be swivelled from its rest position to engage the locking toothing (16) in synchronism with rotation of the belt reel by means of a cam follower (24) of the automatic blocking mechanism (26) engaging a control cam (22) of the locking pawl (18), characterized in that
a) one of the paw] teeth which first comes into contact with the locking toothing (16) is formed as a control tooth (181);
b) the control cam (22) has a radial stroke which is dimensioned so that the locking pawl (18) is swivelled by the cam follower (24) up to first contact of the control tooth (181) with a tooth flank of the locking toothing (16) and insignificantly at the most beyond; and
c) after first contact of the control tooth (181) with a tooth flank of the locking toothing (16) a torque is exerted on the locking pawl (18) by rotation of the belt reel, as a result of which the locking pawl (18) is forced to swivel up to its blocking position defined by positive interlock of the pawl teeth (181, 182, 183) with the locking toothing (16).

2. The belt retractor as set forth in claim 1, characterized in that the prepositioning angle (α) statically established and defined by the amount of the angle of rotation of the belt reel (12) for swivelling the locking pawl (18) from its rest position up to first contact of the control tooth (181) with a tooth flank of the locking toothing (16) has the same magnitude as the pitch (β) of the locking toothing (16).

3. The belt retractor as set forth in claim 2, characterized in that the statically established prepositioning angle (α) amounts to between 0.7 and 1.2 times the pitch (β) of the locking toothing (16).

4. The belt retractor as set forth in any of the preceding claims, characterized in that the angle (γ) between the perpendicular to the tooth flank and a line passing through the location of first contact and the swivel axis of the locking pawl (18) amounts to at least 30° and preferably approx. 38° in the region of first contact of the control tooth (181) with a tooth flank of the locking toothing (161).

5. The belt retractor as set forth in claim 4, characterized in that the control tooth (181) has a leading edge receding away from the extension of a line passing through its tip and the centre point of the locking toothing (16).

6. The belt retractor as set forth in any of the preceding claims, characterized in that the locking pawl (18) has in addition to the control tooth (181) two further pawl teeth (182, 183).

7. The belt retractor as set forth in any of the preceding claims, in which the control cam comprises a positioning section (221) at which in the rest position of the locking pawl (18) the distance away from the centre point of the locking toothing (16) increases, and an adjoining runout section (222) at which said distance away becomes smaller, characterized in that the positioning section (221) forms an angle (δ) of approx. 60° with a line passing through the centre point of the locking toothing (16) and the axis of the cam follower (24) in the rest position of the locking pawl (18).

8. The belt retractor as set forth in claim 7, characterized in that the extension of the runout section (222) as measured in the circumferential direction of the locking toothing (16) is roughly twice as large as that of the positioning section (221).

## Revendications

1. Enrouleur de ceinture pour systèmes de retenue à ceintures de sécurité dans des véhicules, comprenant un moyen de blocage automatique (26) sensible au comportement du véhicule et à celui de la sangle de ceinture et destiné à la bobine de ceinture (12) montée en rotation dans le boîtier (10) et pourvue d'une denture d'arrêt annulaire (16), et comprenant un cliquet d'arrêt (18) qui est monté pivotant sur le boîtier (10), qui comporte au moins deux dents d'arrêt (181, 182, 183) et qui, sous l'action d'un ergot de commande (24) faisant partie du moyen de blocage automatique (26) et agissant sur une coulisse de commande (22) du cliquet d'arrêt (18), peut, à partir de sa position de repos, pivoter de manière synchrone avec la rotation de la bobine de ceinture pour s'engager dans la denture d'arrêt (16), caractérisé en ce que
a) la dent d'arrêt qui arrive la première en contact avec la denture d'arrêt (16) est configurée en dent de commande (181) ;
b) la coulisse de commande (22) possède une course radiale qui est calculée pour que, sous l'action de l'ergot de commande (24), le cliquet d'arrêt (18) pivote jusqu'au premier contact de la dent de commande (181) avec un flanc de dent de la denture d'arrêt (16) et tout au plus dans une proportion insignifiante au-delà ; et
c) après le premier contact de la dent de commande (181) avec un flanc de dent de la denture d'arrêt (16), la rotation de la bobine de ceinture exerce sur le cliquet d'arrêt (18) un couple qui contraint ledit cliquet d'arrêt (18) à pivoter jusqu'à une position bloquée définie par un engrènement par complémentarité de formes des dents d'arrêt (181, 182, 183) avec la denture d'arrêt (16).

2. Enrouleur de ceinture selon la revendication 1, caractérisé en ce que l'angle de préengagement (α) défini par la valeur de l'angle de rotation de la bobine de ceinture (12) correspondant au pivotement du cliquet d'arrêt (18) de sa position de repos jusqu'au premier contact de la dent de commande (181) avec un flanc de dent de la denture d'arrêt (16) et déterminé statiquement est du même ordre de grandeur que le pas (β) de la denture d'arrêt (16).

3. Enrouleur de ceinture selon la revendication 2, caractérisé en ce que l'angle de préengagement (α) déterminé statiquement est compris entre 0,7 et 1,2 fois le pas (β) de la denture d'arrêt (16).

4. Enrouleur de ceinture selon une des revendications précédentes, caractérisé en ce que, dans la zone du premier contact de la dent de commande (181) avec un flanc de dent de la denture d'arrêt (161), l'angle (γ) entre la perpendiculaire au flanc de dent et une ligne passant par le point de premier contact et par l'axe de pivotement du cliquet d'arrêt (18) est compris entre au moins 30° et de préférence environ 38°.

5. Enrouleur de ceinture selon la revendication 4, caractérisé en ce que la dent de commande (181) comporte une face en retrait par rapport au prolongement d'une ligne passant par son sommet et par le centre de la denture d'arrêt (16).

6. Enrouleur de ceinture selon une des revendications précédentes, caractérisé en ce que, en plus de la dent de commande (181), le cliquet d'arrêt (18) comporte deux autres dents d'arrêt (182, 183).

7. Enrouleur de ceinture selon une des revendications précédentes, dans lequel la coulisse de commande comporte une portion d'engagement (221), où, lorsque le cliquet d'arrêt (18) est en position de repos, sa distance par rapport au centre de la denture d'arrêt (16) augmente, et une portion de sortie (222) qui s'y raccorde et où cette distance est moindre, caractérisé en ce que, lorsque le cliquet d'arrêt (18) est en position de repos, la portion d'engagement (221) forme un angle (δ) d'environ 60° avec une ligne qui passe par le centre de la denture d'arrêt (16) et par l'axe de l'ergot de commande (24).

8. Enrouleur de ceinture selon la revendication 7, caractérisé en ce que la longueur de la portion de sortie (222) mesurée dans la direction circonférentielle de la denture d'arrêt (16) est environ deux fois supérieure à celle de la portion d'engagement (221).
